# EUROPEAN PATENT APPLICATION

(11) **EP 4 512 601 A1**
(43) Date of publication of application: **26.02.2025**
(21) Application number: 23791998.0
(22) Date of filing: 17.02.2023
(51) Int. Cl.: B29C 64/124, A61C 19/06, A61C 7/08, B29C 64/386, B29C 64/35, B33Y 10/00, B33Y 40/20, B33Y 80/00, B29C 35/04, B29C 35/02

(54) **METHOD FOR MANUFACTURING TRANSPARENT BLEACHING TRAY**

(30) Priority: 18.04.2022 KR 20220047504
(71) Applicant: ODS Co., Ltd, Incheon 21990 (KR)
(72) Inventor: PARK, Sungwon, Incheon 22003 (KR)
(74) Representative: Valet Patent Services Limited
(86) International application number: PCT/KR2023/002324
(87) International publication number: WO 2023/204416

(57) **Abstract**

The method of manufacturing a transparent whitening tray according to the present invention includes 3D printing of the whitening tray using the composition for forming a transparent whitening tray as a raw material (S10), removing uncured resin and liquid from the whitening tray obtained in the above step (S20), post-curing the whitening tray obtained in the above step (S30), post-heat treating the whitening tray obtained in the above step (S40), and washing the whitening tray obtained in the above step (S40).

## Description

### Technical field

A method of manufacturing a transparent whitening tray and a transparent whitening tray manufactured by the method are disclosed. A method of manufacturing a transparent whitening tray capable of manufacturing a transparent whitening tray with excellent transparency and oral fitness, and a transparent whitening tray manufactured by the method are disclosed.

### Background Technology

Dental whitening is a procedure that whitens teeth by decomposing and separating colored substances on the surface of the tooth using free oxygen, and refers to a procedure in which free oxygen penetrates the enamel and dentine inside the tooth and bleaches the colored substances white.

These teeth whitening techniques can be classified into three categories: expert whitening, home whitening, and consumer whitening.

Expert whitening refers to a whitening treatment performed in a dental hospital using professional drugs and light rays. These expert whitening can have a high effect in a short treatment time, but there is a high risk of side effects on teeth and gums because high concentration of drugs is used, and there is a problem that causes chilling symptoms of teeth.

The manufacturing method of a conventional whitening tray for self-whitening is,
i)The step of copying the patient's teeth with an alginate impression material to obtain an impression body,
ii)The step of creating a tooth model by injecting plaster model material into the impression body obtained above,
iii) The step of applying a block-out resin to the above tooth model to secure a filling space for whitening agents on the personal whitening tray; and
iv)It includes the step of manufacturing a personal whitening tray (mouse guard) by heating and compressing a plastic sheet on the tooth model using a vacuum molding machine.

However, the conventional personal whitening tray manufactured in this way is deformed (contraction and expansion or distortion) due to the difference in heat or humidity outside the mouth while repeatedly wearing it, resulting in poor oral suitability. Therefore, the conventional technology may cause excessive leakage of whitening agents and may put strong pressure on teeth and gums.

On the other hand, consumer whitening (life whitening) refers to tooth whitening in which individuals purchase a general whitening treatment kit and whiten themselves.

### Summary of the Invention

### Technical Problem

An embodiment of the present invention provides a method of manufacturing a transparent whitening tray capable of manufacturing a transparent whitening tray having excellent transparency and oral suitability.

Another embodiment of the present invention provides a transparent whitening tray manufactured by the manufacturing method of the transparent whitening tray.

### Technical Solution

The present invention provides the following information:
The step of 3D printing the whitening tray using the composition for forming a transparent whitening tray (S 10) as a raw material;
The step of removing uncured resin and liquid from the whitening tray obtained in the step (S 10) above (S20);
Post-curing the whitening tray obtained in the above step (S20) (S30);
Post-heat the whitening tray obtained in step S30 (S40); and
A step (S50) of washing the whitening tray obtained in the step (S40).

The present invention provides the following additional information:
The above step(S20) is performed by spraying 5-12 bar of compressed air to the whitening tray above,
Step(S30) is performed at a temperature of 60 to 90°C,
Step(S40) is performed under a strong temperature of 25°C/min or less with a temperature of 60-90°C as a starting temperature,
The above step(S50) includes a wash liquid washing step(S50-1) and a water washing step(S50-2),
There is a time interval of 5 minutes or more between the wash liquid washing step(S50-1) and the water washing step(S50-2).

### Effects of the Invention

The method of manufacturing a transparent whitening tray according to the present invention increases the convenience of mounting by providing a transparent whitening tray with excellent oral suitability, and improves economic feasibility by simplifying the manufacturing process because the gypsum model is unnecessary.

The manufacturing method of a transparent whitening tray according to an embodiment of the present invention has the following advantages:
(1) It is possible to provide a transparent whitening tray with excellent transparency and oral fitness.
(2) Since there is no gypsum model manufacturing, the process can be simplified compared to the conventional method of manufacturing a transparent whitening tray.
(3) It has excellent oral fitness with accurate output by a 3D printer.
(4) There is little deformation depending on temperature and humidity, so it can be worn repeatedly and continuously.
(5) Due to the ductility and excellent oral suitability of the material, leakage of tooth whitners can be minimized when worn for a long time.

### Brief Description of the Drawing

FIG. 1 is a photograph showing a transparent whitening tray manufactured in Example 1.
FIG. 2 is a photograph showing a transparent whitening tray manufactured in Comparative Example 1.
FIG. 3 is a photograph showing a transparent whitening tray manufactured in Comparative Example 2.
FIG. 4 is a photograph showing a transparent whitening tray manufactured in Comparative Example 6.

### Specific Instructions for Implementing the Invetion

Hereinafter, a method of manufacturing a transparent whitening tray according to an embodiment of the present invention will be described in detail.

In the present specification, the term "composition for forming a transparent whitening tray" means a material in the form of a solution, suspension, or paste including a photocurable compound, a photoinitiator, and a liquid but not including a pigment. For example, the composition for forming the transparent whitening tray may be the same as the composition for forming a transparent orthodontic device disclosed in Korean Patent Application No. 10-2020-0107965. Korean Patent Application No. 10-2020-0107965 is entirely incorporated into the present specification.

In addition, in this specification, "partial curing" means that the curing rate is 40% to 90%.

In addition, in this specification, "complete curing" means that the curing rate is 99% to 100%.

According to an embodiment of the present invention, the method of manufacturing a transparent whitening tray may include a step of 3D printing the whitening tray using the composition for forming the transparent whitening tray as a raw material (S10), a step of removing uncured resin and liquid (e.g., water) from the whitening tray obtained in the step (S20), a step of post-curing the whitening tray obtained in the step (S30), a step (S40) of post-heat-treating the whitening tray obtained in the step (S40), and a step (S50) of washing the whitening tray obtained in the step (S40).

The step S20 may be performed by spraying compressed air of 5 to 12 bar onto the whitening tray. When the pressure of the compressed air is within the above range, transparency of the whitening tray may be improved.

For example, the step S20 may be performed using an air gun.

The step S30 may be performed at a temperature of 60 to 90°C. When the post-curing temperature of the step S30 is within the above range, transparency of the whitening tray may be improved.

The step S40 may be performed by lowering the temperature to 25°C/min or less using a temperature of 60 to 90°C as a starting temperature. For example, the step S40 may be performed up to a termination temperature of 15 to 50°C. When the post-heat treatment condition of the step S40 is within the above range, transparency of the whitening tray may be improved.

The step S50 may include a washing solution washing step S50-1 and a water washing step S50-2. For example, the washing solution washing step S50-1 may be performed using a washing solution including alcohol, isopropyl alcohol, ethanol, tripropylene glycol monomethyl ether (TPM), or a combination thereof.

There may be a time interval of 5 minutes or more as a time for which the washing solution is completely dried between the washing solution washing step S50-1 and the water washing step S50-2. When a washing time difference between the washing solution washing step S50-1 and the water washing step S50-2 is within the above range, transparency of the whitening tray may be improved.

According to an embodiment of the present disclosure, the method of manufacturing a transparent whitening tray with the above configuration is a photocurable compound with durability and constant ductility against heat and by printing the transparent whitening tray suitable for the patient's oral shape using 3D printing technology, it is possible to provide a transparent whitening tray that can be worn repeatedly because there is little deformation due to heat and humidity.

Another aspect of the present disclosure provides a transparent whitening tray manufactured by a manufacturing method of a transparent whitening tray.

The manufactured transparent whitening tray has excellent advantages in both transparency and oral suitability compared to the conventional transparent whitening tray.

### Preparation Example 1: Preparing of a composition for forming a transparent whitening tray

A composition for forming a transparent whitening tray is prepared including the following components.
i)As a photocurable compound, a mixture of diuretic dimethacrylate (Cas No. 72869-86-4, R=H) and R=CH3 substances, molecular formula: C23H38N2O8) (PP1), bisphenol A ethoxylate dimethacrylate (Cas No. 41637-38-1) (PP2) (Cas No. 868-77-9) (PP3) (PP3), a urethane acrylate oligomer (Cas No. 106556-00-7) (PP4) (PP4), a triethylene glycol dimethacrylate (Cas No. 109-16-0) (PP5) (PP5) (Cas No. 5),
ii)Dianal BR-83 (Mitsubishi Rayon Manufactured, Glass Transition Temperature 105°C, Weight Average Molecular Weight 40,000) as Acrylic Resin,
iii)As a photopolymerization initiator, phenyl bis (2,4,6-trimethylbenzoyl) phosphine oxide (Cas No. 162881-26-7) and
iv) 2,6-D-Tersury-butyl-para-cresol as an antioxidant

The materials and contents used in each of the Examples and Comparative Examples are shown in Table 1 below. In Table 1 below, the unit of each value is parts by weight. In addition, the content of the acrylic resin, the photoinitiator, and the antioxidant is a content based on 100 parts by weight of the total weight of the five photopolymerizable compounds.

**[chemical formula** 1] R'CH₂[C(CH₃)(R)CH₂]₂CH₂R'(R=H or CH₃, R'=NHCO₂CH₂CH₂O₂CC(CH₃)=CH₂)

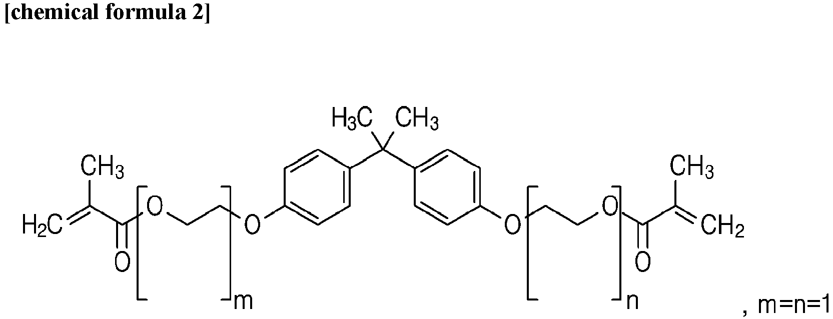

**[chemical formula 3]** CH₂=C(CH₃)COOCH₂CH₂OH

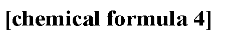

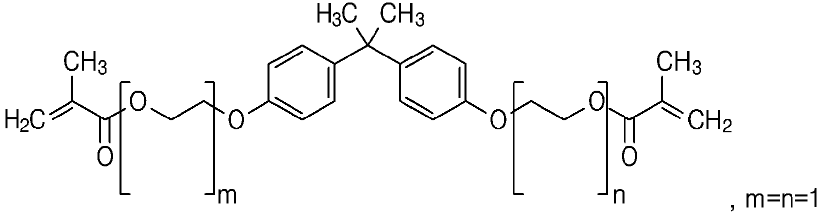

**[chemical formula 5]** CH₂=C(CH₃)COO(CH₂CH₂O)₃COC(CH₃)=CH₂.

**[Table 1]**

| **photocurable compound** | | | | | **Acrylic Resin** | **photopolymer ization initiator** | **antioxidant** |
|---|---|---|---|---|---|---|---|
| PP1 | PP2 | PP3 | PP4 | PP5 | | | |
| 100 | 55 | 40 | 23 | 7 | 2.5 | 6 | 1 |

### Embodiment 1: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Embodiment 2: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 5 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Embodiment 3: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 12 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Embodiment 4: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 60°C to obtain a third whitening tray. Thereafter, the third whitening tray was post-heat treated to 25°C under a temperature reduction of 25°C/min with a temperature of 60°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Embodiment 5: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 90°C to obtain a third whitening tray. Thereafter, the third whitening tray was post-heat treated to 25°C under a temperature reduction of 25°C/min with a temperature of 90°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Embodiment 6: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 5°C/min with a temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Embodiment 7: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 50°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Embodiment 8: Manufacture of a transparent whitening tray

First, the first whitening tray was outputted to the 3D printer using the composition for forming a transparent whitening tray prepared in Preparation Example 1 according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. After 20 minutes, the fifth whitening tray was completely washed with water to obtain a sixth whitening tray.

### Comparative Example 1: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray was partially cured. Thereafter, the first whitening tray was completely washed with isopropyl alcohol to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray.

### Comparative Example 2: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray is a partially cured product. Thereafter, 3 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Comparative Example 3: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray is partially cured. Thereafter, 14 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Comparative Example 4: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 30°C to obtain a third whitening tray. Thereafter, the third whitening tray was post-heat treated to 25°C under a temperature reduction of 25°C/min with a temperature of 30°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Comparative Example 5: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 120°C to obtain a third whitening tray. Thereafter, the third whitening tray was post-heat treated to 25°C under a temperature reduction of 25°C/min with a temperature of 120°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Comparative Example 6: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray is a partially cured product. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 30°C/min with a starting temperature of 75°C as a starting temperature to obtain a fourth whitening tray. Thereafter, the fourth whitening tray was completely washed with isopropyl alcohol to obtain a fifth whitening tray. After 5 minutes, the fifth whitening tray was completely washed with water to obtain a sixth whitening tray.

### Comparative Example 7: Manufacture of Transparent Whitening Tray

First, the first whitening tray was outputted to the 3D printer using the composition for forming a transparent whitening tray prepared in Preparation Example 1 as a rang to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the post-cured third whitening tray was directly completely washed with isopropyl alcohol without post-heat treatment to obtain a fourth whitening tray. After 5 minutes, the fourth whitening tray was completely washed with water to obtain a fifth whitening tray.

### Comparative Example 8: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray is a partially cured product. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. Thereafter, the fifth whitening tray was immediately completely washed with water without time intervals to obtain a sixth whitening tray.

### Reference Example 1: Manufacture of Transparent Whitening Tray

First, the first whitening tray was outputted to the 3D printer using the composition for forming a transparent whitening tray prepared in Preparation Example 1 as a raw material according to 3D printing data made of 3D scan data of teeth of a specific patient (that is, patient A). The first whitening tray is partially cured. Thereafter, 8 bar of compressed air was sprayed onto the first whitening tray with an air gun to remove the uncured resin and liquid to obtain a second whitening tray. Thereafter, the second whitening tray was post-cured at 75°C to obtain a third whitening tray. Thereafter, the third whitening tray was post-heat treated to 25°C under a temperature reduction of 25°C/min with a temperature of 75°C as a starting temperature to obtain a fourth whitening tray. Thereafter, the fourth whitening tray was completely washed with isopropyl alcohol to obtain a fifth whitening tray. One minute later, the fifth whitening tray was completely washed with water to obtain a sixth whitening tray.

### Evaluation Example 1: Evaluation of transparency of transparent whitening tray

The sensory tests were performed on the transparent whitening trays manufactured in each of the above embodiments and Comparative Examples. Specifically, sensory tests were performed on five trained evaluation personnel in the following manner. That is, after evaluating the level of transparency of each transparent whitening tray by the 5-point method by visual observation, each score was averaged and shown in Table 2 below. Here, the higher the score for each item, the higher the transparency of the corresponding item.

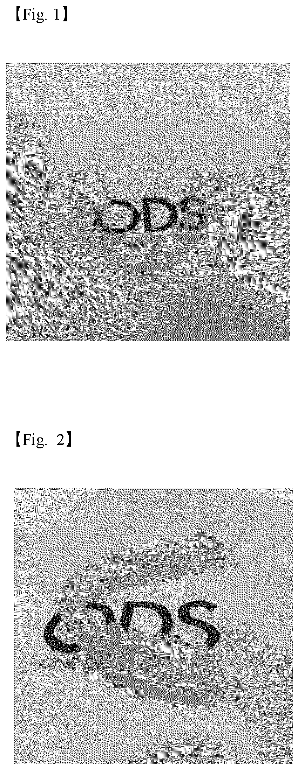

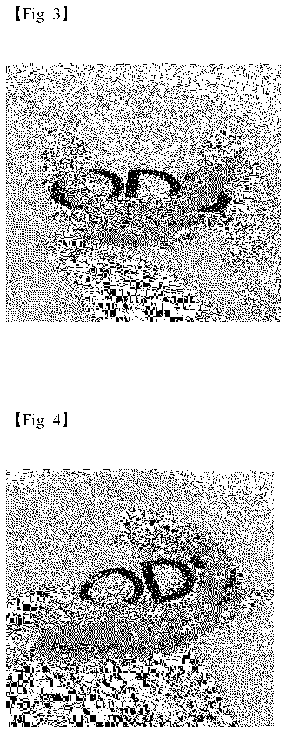

In addition, photographs of the whitening trays manufactured in Example 1, Comparative Example 1, Comparative Example 2, and Comparative Example 6 are shown in FIGS. 1 to 4, respectively.

### Evaluation Example 2: Evaluation of oral fitness of transparent whitening tray

The sensory tests were performed on the transparent whitening trays prepared in each of the above embodiments and comparative examples. Specifically, sensory tests were performed on five trained evaluation personnel in the following manner. That is, each transparent whitening tray was covered on a tooth model (i.e., a gypsum model) of a specific patient (i.e., patient A), and the level of oral fitness was evaluated by the 5-point method by visual observation, and each score was averaged and shown in Table 2 below. Here, the higher the score for each item, the higher the oral fitness of the corresponding item.

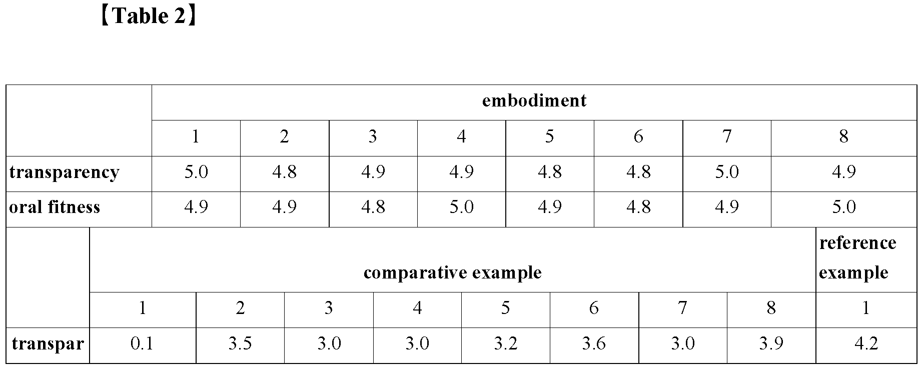

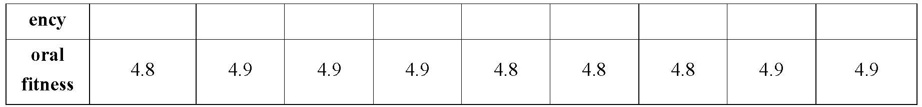

Referring to Table 2 and FIGS. 1 to 4, it was found that the transparent whitening trays of Examples 1 to 8 had higher transparency than the transparent whitening trays of Comparative Examples 1 to 8 and Reference Example 1. In addition, the whitening trays of Examples 1 to 8, Comparative Examples 1 to 8, and Reference Example 1 were all found to have excellent oral fitness.

Although preferred embodiments according to the present invention have been described above with reference to the drawings and embodiments, this is only illustrative, and a person of ordinary skill in the art will understand that various modifications and equivalent other embodiments are possible from this. Therefore, the scope of protection of the present invention should be determined by the appended claims.

## Claims

1. A Methode for manufacturing a transparent whitening tray comprising steps of
3D printing the whitening tray using the composition for forming a transparent whitening tray as a raw material;(S10)
removing uncured resin and liquid from the whitening tray obtained in the step(S 10);(S20)
Post-curing the whitening tray obtained in the above step(S20);(S30)
Post-heating the whitening tray obtained in step(S30);(S40) and
washing the whitening tray obtained in the step(S40);(S50),
The above step(S20) is performed by spraying 5-12 bar of compressed air to the whitening tray above,
Step(S30) is performed at a temperature of 60 to 90°C,
Step(S40) is performed under a strong temperature of 25°C/min or less with a temperature of 60-90°C as a starting temperature,
The above step(S50) includes a wash liquid washing step(S50-1) and a water washing step(S50-2),
There is a time interval of 5 minutes or more between the wash liquid washing step(S50-1) and the water washing step(S50-2), which is a time when the washing liquid is completely dried.
